# FASCICULE DE BREVET EUROPEEN

(11) **EP 0 985 112 B1**
(45) Date de publication et mention de la délivrance du brevet: **22.08.2001**
(21) Numéro de dépôt: 98901449.3
(22) Date de dépôt: 16.02.1998
(51) Int. Cl.: F16K 11/078

(54) **MECANISME MITIGEUR POUR ARMATURE SANITAIRE**
MISCHMECHANISMUS FÜR EINE SANITÄRARMATUR
MIXING VALVE MECHANISM FOR PLUMBING FIXTURE

(30) Priorité: 06.06.1997 CH 137997
(43) Date de publication de la demande: 15.03.2000
(73) Titulaire: SIMILOR S.A., CH-1227 Carouge-Genève (CH)
(72) Inventeur: RODRIGUEZ, Jean-Jacques, F-74140 Douvaine (FR)
(74) Mandataire: Micheli & Cie
(86) Numéro de dépôt international: IB9800184
(87) Numéro de publication internationale: WO9855787

(56) Documents cités:
- EP-A- 0 571 768
- DE-A- 4 437 370

## Description

La présente invention se rapporte aux mécanismes mitigeurs pour armatures sanitaires c'est-à-dire des mécanismes généralement à plaquettes céramiques, permettant à l'aide d'un seul levier de commande de contrôler le débit et la température de l'eau de sortie alors que l'alimentation du mécanisme se fait par une canalisation d'eau froide et une canalisation d'eau chaude.

Ces mécanismes sont destinés à être logés dans le corps d'une armature sanitaire, les canaux d'entrée et de sortie d'eau disposés sur la face inférieure du mécanisme étant connectés de façon étanche aux canalisations d'arrivée et de sortie d'eau par simple application à force contre celles-ci par l'intermédiaire d'un joint d'étanchéité.

Les mécanismes ou cartouches de ce type actuellement existantes comportent un boîtier renfermant deux plaquettes céramiques, l'une fixe et l'autre mobile en rotation et en translation. Le boîtier renferme encore un entraîneur solidaire de la plaquette mobile et coulissant linéairement dans un guide pivoté dans la partie supérieure du boîtier, guide sur lequel est articulé le levier de commande dont l'extrémité inférieure coopère avec l'entraîneur pour l'entraîner dans ses mouvements de rotation et de translation.

Le col ou partie haute du boîtier traversée par le levier de commande, est de plus petit diamètre que sa partie inférieure qui est elle obturée par un fond servant de support à un joint d'étanchéité.

Ces mécanismes ou cartouches existantes présentent certains inconvénients dont les principaux sont les suivants :
- pour pouvoir être placés dans les corps des armatures sanitaires modernes de faible hauteur l'épaisseur des plaquettes céramiques doit être faible ce qui rend leur fabrication difficile et leur confère une grande fragilité.
- la liaison entre le levier et l'entraîneur est souvent fragile de sorte que l'on est conduit à renforcer les leviers (par exemple en métal) pour leur conférer la résistance nécessaire ce qui est onéreux et impose des limitations à l'aspect esthétique du levier.
- Lorsqu'elles en comportent ces butées nécessitent un réglage au montage du mécanisme dans l'armature. De plus ces butées ne sont pas outrepassables c'est-à-dire qu'elles limitent définitivement le débit ou la température à une valeur donnée et que même si l'usager veut augmenter le débit ou la température cela lui est impossible.

Un mécanisme selon le préambule de la revendication 1 est dévoilé par le document DE-A-4437370.

La présente invention propose la réalisation d'un mécanisme ou cartouche du type précédemment décrit qui obvie aux inconvénients des mécanismes actuels. De plus, l'invention a pour but de réaliser un mécanisme moins cher, présentant moins de pièces, permettant dans un même encombrement de prévoir des plaquettes céramiques plus épaisses et qui soit équipé de butées outrepassables de température et/ou de débit qui soient amovibles.

Le mécanisme mitigeur pour armature sanitaire selon l'invention se distingue par les caractéristiques énumérées à la revendication 1.

Le dessin annexé illustre schématiquement et à titre d'exemple une forme d'exécution du mécanisme selon l'invention.

La figure 1 est une élévation en coupe du mécanisme.

La figure 2 est une vue de dessus du mécanisme.

La figure 3 est une vue de dessous du mécanisme.

La figure 4 est une vue de la face inférieure de la plaquette fixe du mécanisme.

La figure 5 est une vue de la face supérieure de la plaquette fixe du mécanisme.

La figure 6 est une coupe de la plaquette fixe du . mécanisme suivant la ligne I-I de la figure 4.

La figure 6a est une coupe de la plaquette fixe du mécanisme suivant la ligne I-Ia de la figure 4.

La figure 7 est une vue de la face supérieure de la plaquette mobile du mécanisme.

La figure 8 est une vue de la face inférieure de la plaquette mobile du mécanisme.

La figure 9 est une vue en coupe de la plaquette fixe suivant la ligne II-II de la figure 7.

La figure 10 est une vue en plan de l'entraîneur du mécanisme.

La figure 11 est une vue en coupe de l'entraîneur suivant la ligne III-III de la figure 10.

La figure 12 est une vue en plan du joint du mécanisme.

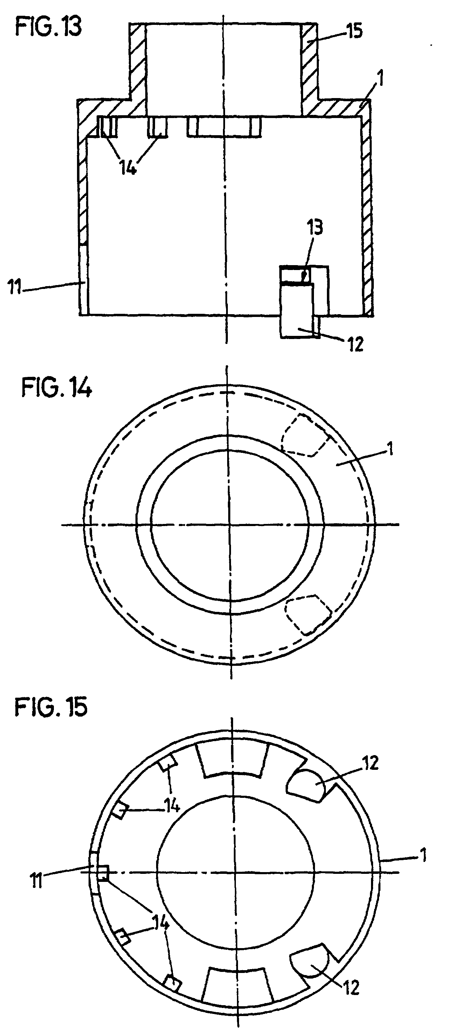

La figure 13 est une vue en coupe axiale du boîtier du mécanisme.

La figure 14 est une vue de dessus du boîtier du mécanisme.

La figure 15 est une vue de dessous du boîtier du mécanisme.

Les figures 16, 18 et 19 illustrent le levier de commande monté sur le guide du mécanisme dans trois positions relatives différentes.

La figure 17 est une vue de dessus du guide et du levier assemblés dans leur position relative illustrée à la figure 16.

La figure 20 est une vue de côté du levier du mécanisme.

La figure 21 est une vue en plan de l'extrémité inférieure du levier.

La figure 22 est une vue en plan du guide d'une variante du mécanisme

La figure 23 est une vue en plan du guide d'une seconde variante du mécanisme.

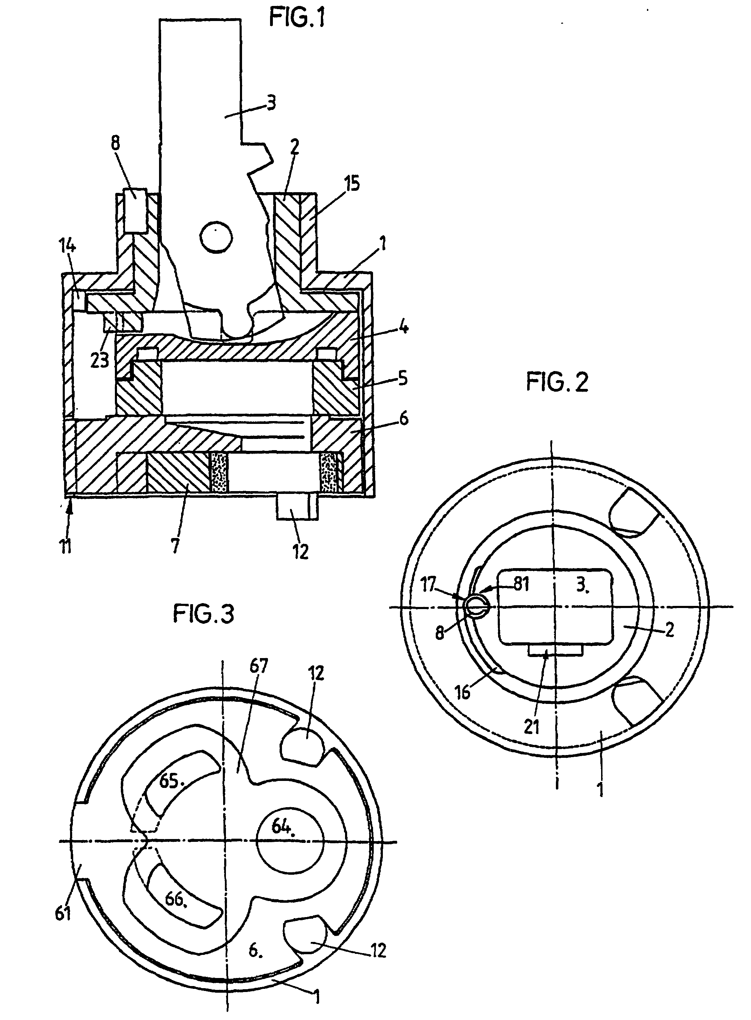

En référence aux figures 1 à 3 où l'on voit le mécanisme monté, celui-ci comporte un boîtier 1 dans lequel est logé, de haut en bas, un guide 2 sur lequel est pivoté un levier de commande 3. L'extrémité inférieure de ce levier de commande est en prise avec une formation d'accouplement que présente la face supérieure d'un entraîneur 4 coulissant linéairement par rapport au guide 2. Cet entraîneur 4 est solidaire angulairement et linéairement d'une plaquette mobile supérieure 5 dont la face inférieure glisse sans jeu et de façon étanche sur la face supérieure d'une plaquette fixe inférieure 6. Cette plaquette fixe 6 est angulairement solidaire du boîtier 1 et encliquetée axialement sur celui-ci et constitue ainsi elle-même le fond ou face inférieure du mécanisme. Enfin, un joint d'étanchéité 7 est logé directement dans un logement pratiqué dans la face inférieure libre de la plaquette fixe.

Par cette conception de la plaquette fixe 6 encliquetée axialement sur le boîtier 1 on voit déjà que par rapport aux mécanismes existants et donc pour un même encombrement en hauteur, les plaquettes 5 et 6 et notamment cette dernière qui présente des ouvertures de forme compliquée, peuvent être plus épaisses, du fait de l'absence de fond du boîtier, ce qui rend possible d'y pratiquer un logement débouchant sur sa face libre recevant le joint d'étanchéité 7.

Ce mécanisme comporte encore une butée surpassable et amovible de température 8 et une butée surpassable et amovible de débit 9.

La description qui va suivre fera encore ressortir d'autres caractéristiques de ce mécanisme qui permettent d'atteindre les buts fixés plus haut à savoir diminution du prix et de nombre de pièces constitutives, robustesse, flexibilité d'usage et de fonction.

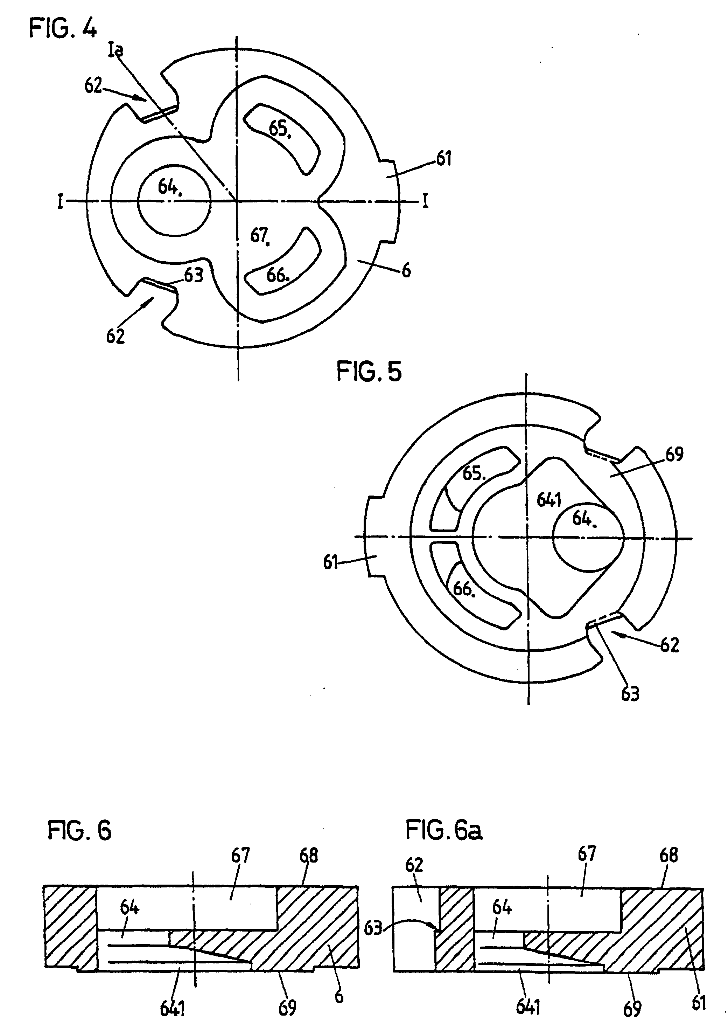

La plaquette fixe inférieure 6 est illustrée en détail aux figures 4 à 6. Cette plaquette 6 en céramique comporte à sa périphérie une saillie 61 destinée à coopérer avec une entaille 11 de la paroi du boîtier 1. La périphérie de cette plaquette 6 comporte encore deux entailles 62 munies d'un épaulement 63 destinées à donner passage à deux pieds 12 du boîtier 1. Ces épaulements 63 coopèrent avec un épaulement correspondant 13 des pieds 12 servant à l'encliquetage de la plaquette fixe 6 sur le boîtier 1. La saillie 61 et les entailles 62 fixent ainsi la position angulaire et axiale de la plaquette 6 sur le boîtier 1 en position de service, de plus ces formations évitent toute erreur de montage de la plaquette 6 dans le boîtier 1.

Cette plaquette 6 comporte un orifice d'évacuation de l'eau mélangée 64 et deux fentes d'arrivée 65 et 66 de l'eau froide et de l'eau chaude respectivement. Ces trois ouvertures 64,65,66 débouchent toutes dans la face d'un logement 67 pratiqué dans la face inférieure 68 de cette plaquette 6. Les fentes d'arrivée d'eau 65,66 vont en s'évasant et débouchent sur la face supérieure 69 de cette plaquette fixe 6. Les arrêtes des fentes 65,66 avec les faces supérieure et inférieure de la plaquette fixe sont vives ce qui, compte tenu de la forte épaisseur de cette plaquette, contribue à diminuer la cavitation du flux d'eau et donc le bruit. L'orifice 64 d'évacuation d'eau s'évase dans une creusure 641 débouchant sur la face supérieure 69 de la plaquette 6.

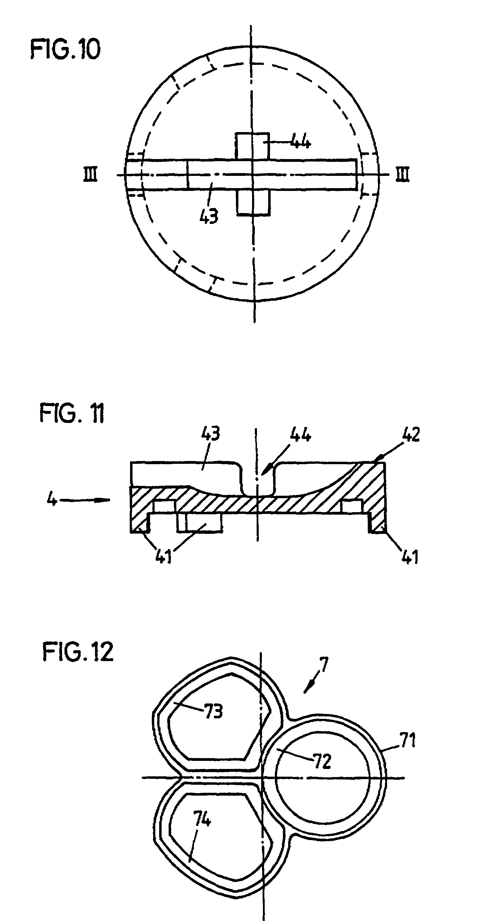

Le joint d'étanchéité 7 venant se loger dans le logement 67 de la plaquette 6 est illustré à la figure 12. Il comporte une armature 71 en matière plastique rigide dont la forme extérieure correspondant à la forme du logement 67 et définissant trois passages. Chacun de ces passages renferme une bague d'étanchéité en matière plastique ou en caoutchouc 72,73,74. L'épaisseur de ces bagues 72,73,74 est plus grande que celle de l'armature 71. Lorsque le joint 7 est en position dans le logement 67, les bagues 72,73,74 entourent les ouvertures 64,65 et 66 de la plaquette 6 et permettent de les séparer de façon étanche.

La hauteur des bagues 72,73,74 est supérieure à la profondeur du logement 67 ainsi lorsque le mécanisme est appliqué à force contre le fond du corps d'une armature sanitaire les bagues d'étanchéité 72,73,74 sont comprimées axialement et permettent de relier de façon étanche les ouvertures 64,65,66 au conduit d'évacuation d'eau mélangée et aux conduits d'arrivée d'eau froide et chaude.

Dans une variante les joints peuvent être réalisés d'une seule pièce et ne pas comporter d'ouverture. En effet, logés dans l'évidement de la plaquette fixe, ils ne risquent pas d'être aspirés par fluage dans l'un des passages de cette plaquette ou dans le conduit d'évacuation d'eau mélangée.

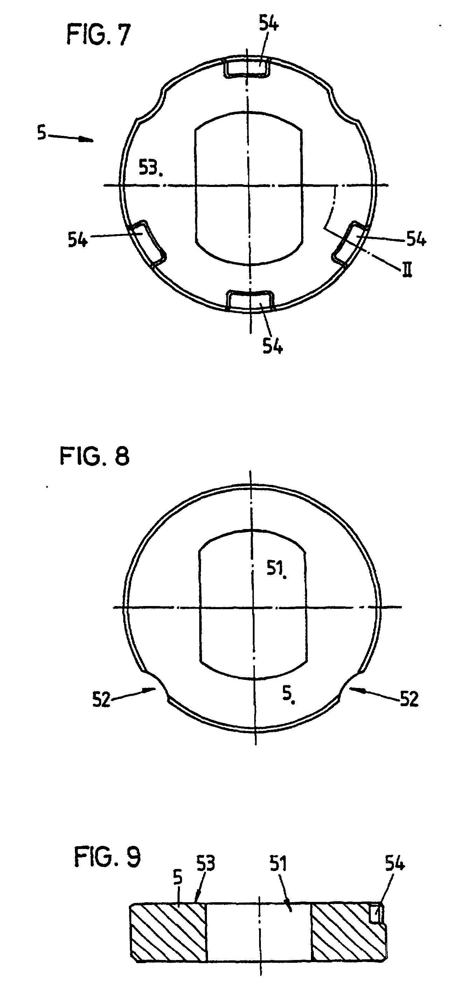

La plaquette mobile 5 supérieure du mécanisme est illustrée aux figures 7 à 9. Elle comporte une ouverture centrale 51 de forme générale rectangulaire permettant de faire communiquer, suivant sa position angulaire et transversale relative par rapport à la plaquette fixe, les ouvertures 64 et 65,66 comme dans un mitigeur conventionnel.

La périphérie de cette plaquette mobile comporte deux évidements 52 donnant passage au pied 12 du boîtier lors de l'introduction de la plaquette mobile 5 dans ce boîtier ce qui évite toute erreur de montage.

La face supérieure 53 de la plaquette mobile 5 comporte à sa périphérie des creusures 54 au nombre de 4 recevant les quatre doigts 41 que l'entraîneur 4 comporte et saillants de sa face inférieure. Ces doigts 41 et ces creusures ne sont pas répartis uniformément autour de l'axe du mécanisme évitant ainsi toute possibilité de montage erronée de la plaquette fixe 5.

L'entraîneur 4 est illustré aux figures 10 et 11. Il comporte les doigts d'entraînement 41 de la plaquette mobile 5 sur sa face inférieure. Son diamètre extérieur est égal à celui de la plaquette mobile 5, tous deux inférieurs à celui de la plaquette fixe 6 qui lui correspond au diamètre interne du boîtier 1. Ainsi, l'entraîneur 4 et la plaquette mobile 5 peuvent se déplacer angulairement et latéralement à l'intérieur du boîtier 1.

La face supérieure 42 de l'entraîneur comporte une première rainure diamétrale 43. D'un côté cette rainure 43 débouche sur la périphérie de l'entraîneur 4 mais de l'autre non. Une seconde rainure 44 s'étendant suivant un diamètre de l'entraîneur perpendiculaire à la rainure 43 constitue une formation d'entraînement en translation de l'entraîneur 4 par le levier 3. La rainure 44 s'étend sur une faible longueur seulement correspondant à l'épaisseur du levier 3.

La rainure 43 elle constitue une formation d'entraînement en rotation de l'entraîneur par l'ensemble formé du guide 2 et du levier 3.

Le guide 2 comporte une partie tubulaire pivotée dans le col 15 du boîtier 1 et des ailettes 21,22 diamétralement opposées, mais d'étendue angulaire différentes. L'ailette 22 s'étend jusqu'à la paroi du boîtier 1 tandis que l'ailette 21 est plus courte et pivote à l'intérieur des bossages 14 que comporte sur une moitié de sa périphérie la paroi interne du boîtier 1. Ainsi, le guide 2 ne peut pas être monté à l'envers dans le boîtier 1.

La face inférieure 24 du guide comporte une nervure 23 coopérant avec la rainure 43 de l'entraîneur et lui servant de guidage dans ses déplacements linéaires et d'entraînement dans ses déplacements angulaires.

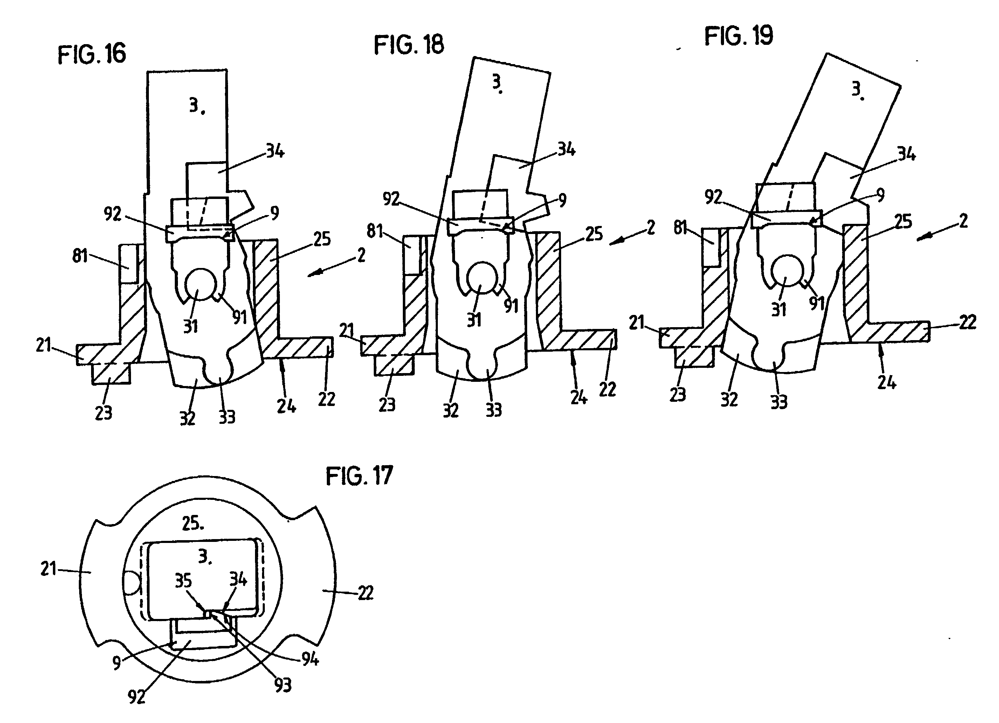

Le levier 3, voir figures 16 à 21, est monté pivotant sur le guide 2 autour d'un axe 31. La course de basculement de ce levier 3 est limitée par son entrée en contact avec la paroi intérieure de la partie tubulaire 25 du guide 2.

L'extrémité inférieure du levier 3 comporte une nervure 32 logée dans la rainure 43 de l'entraîneur 4 et des ergots 33, de part et d'autre de la nervure 32, engagés dans la rainure 44 de l'entraîneur 4.

En basculant autour de son axe 31, le levier entraîne l'entraîneur 4 dans ses déplacements linéaires parallèles à la rainure 43 de celui-ci. Le mouvement permet de régler le débit d'eau du mécanisme en modifiant la section communicante des ouvertures 64 et 65,66 de la plaquette fixe 6.

Par une rotation du levier 3 perpendiculaire à son axe 31, le guide entraîne l'entraîneur 4 en rotation ainsi que la plaquette mobile 5. Ceci provoque une modification de la température de l'eau évacuée en modifiant le rapport des sections des passages 65,66 qui sont en communication avec l'ouverture 64 de la plaquette fixe.

Le levier 3 comporte sur un de ses faces latérales une creusure 34 formant ainsi un cran 35. Le mécanisme comporte encore une butée surpassable amovible de débit constituée ici par un taquet 9 comportant à son extrémité inférieure une pince élastique 91, dans sa partie médiane une colerette 92 et dans sa partie haute une face présentant un arrêt 93 et un plan incliné 94.

Lorsque cette butée est introduite dans un logement du guide 2 sa pince 91 vient s'encliqueter sur l'axe 31 du levier maintenant ainsi la butée en position de service. Dans cette position, le plan incliné 94 de la butée est en appui contre la face latérale du levier 3 comportant la creusure 34.

En position fermée, débit zéro, figures 16,17, le cran 35 du levier n'est pas en contact avec l'arrêt 93 de la butée.

En basculant le levier 3 jusque dans sa position illustrée à la figure 18, le cran 35 vient au contact de l'arrêt 93. L'usager ressent une résistance accrue et arrête le basculement du levier 3. On a ainsi limité le débit d'eau. Si toutefois l'usager nécessite vraiment un débit plus fort, il force le basculement du levier, l'arrêt 93 échappe au cran 35 du levier par déformation élastique et le débit maximum peut être atteint (figure 19).

Cette butée de débit 9 est donc bien surpassable à volonté, mais elle indique néanmoins à l'usager une position pour laquelle le débit est suffisant mais limité. Ce n'est donc que volontairement que l'on augmentera le débit au delà de cette valeur. Cet agencement permet, notamment dans les lieux publics, de réaliser une grande économie d'eau.

De plus, cette butée est amovible et accessible de l'extérieur du mécanisme de sorte qu'elle peut être mise en place ou supprimée sans aucun démontage du mécanisme. Ainsi, le même mécanisme peut être muni ou non d'une butée surpassable de débit simplement en plaçant ou non le taquet 9.

Enfin, le mécanisme décrit est encore muni d'une butée surpassable et amovible de température. Cette butée est constituée d'un tube fendu élastique 8 introduit dans un logement axial 81 pratiqué dans la partie tubulaire 25 du guide 2. Ce logement axial 81 débouche sur la face périphérique de cette partie tubulaire 25 du guide de sorte que le tube élastique 8 fait saillie sur la surface périphérique du guide 2.

La face interne du col du boîtier 1 présente une gorge 16 dont une partie présente une plus grande profondeur que l'autre formant ainsi un seuil 17 entre ces deux parties.

En position froide, le guide 2 est placé de telle façon que le tube fendu 8 soit situé à l'extrémité de la partie profonde de la gorge 16. Au cours du mouvement rotatif du guide 2, augmentant la température de sortie, le tube 8 vient en butée contre le seuil 17 de la gorge 16. L'usager sent donc une résistance plus forte et arrête la rotation du levier limitant ainsi la température de l'eau mélangée. Si toutefois l'usager désire avoir de l'eau plus chaude, il force le déplacement angulaire du guide 2, le tube fendu 8 se déforme et se rétracte dans le logement 81 du guide et la course du guide 2 est augmentée, augmentant la température de l'eau. On a donc réalisé une butée de température surpassable.

En plus, cette butée surpassable est amovible de l'extérieur du mécanisme une fois monté. En effet, il suffit d'enlever le tube fendu 8 et l'on a supprimé la butée de température. Cette opération se fait aisément même une fois le mécanisme en place dans l'armature sanitaire.

Les principaux avantages de ce mécanisme mitigeur pour armature sanitaire sont les suivants :
- Il comporte moins de pièces, puisque le boîtier ne comporte pas de fond.
- Pour une même hauteur du boîtier, l'épaisseur des plaquettes peut être augmentée, ce qui permet de loger le joint d'étanchéité dans la plaquette fixe. Ceci permet d'éviter l'extrusion du joint dans cette plaquette. Ceci permet de prévoir dans une variante un joint en une seule pièce sans armature.
- L'extrémité inférieure du levier des armatures est robuste, elle entraîne l'entraîneur à l'aide de sa nervure longitudinale et de ses ergots, ce qui augmente la résistance de l'entraînement de la plaquette mobile.
- Il comporte une butée de débit amovible et surpassable.
- Il comporte une butée de température amovible et surpassable.
- Le même mécanisme peut être muni ou non de ces butées de débit et de température en mettant ou enlevant simplement un taquet ou une goupille fendue accessible de l'extérieur du mécanisme même une fois monté dans l'armature sanitaire.
- Ces butées surpassables n'ont besoin d'aucun mécanisme pour libérer l'arrêt intermédiaire comme c'est généralement le cas. L'usager peut surpasser ou dépasser l'arrêt intermédiaire simplement en exerçant une poussée plus prononcée sur le levier de commande.
- Le boîtier est en une seule pièce et peut être injecté en matière plastique.
- Toutes les pièces comportent des détrompeurs évitant une erreur de montage. En effet, l'assemblage du mécanisme ne peut être effectué que d'une seule façon, la bonne.
- De plus, l'expérimentation a montré que du fait de l'augmentation d'épaisseur des plaquettes 5,6, notamment de la plaquette fixe 6, les orifices 64,65,66 pouvaient être conformés de manière à linéariser la valeur de la température en fonction de la rotation du levier de commande et à linéariser également la commande de débit en fonction du basculement du levier.
- Enfin, l'expérimentation a également démontré que l'épaisseur augmentée de la plaquette fixe permettait de configurer les ouvertures 64,65,66 de façon simple tout en obtenant de très faibles valeurs du bruit du débit d'eau. Ceci est en effet surprenant car dans les mécanismes actuels, il est nécessaire de prévoir des structures antibruit constituées de lamelles, pyramides et autres formes complexes de la surface inférieure de l'entraîneur. Ceci n'est pas nécessaire avec la présente construction car la plus grande épaisseur des plaquettes et notamment de la plaquette fixe réduit la cavitation de l'eau autour des armatures 64,65,66. Les arêtes que forment ces ouvertures avec les surfaces supérieure et inférieure de la plaquette fixe sont vives.

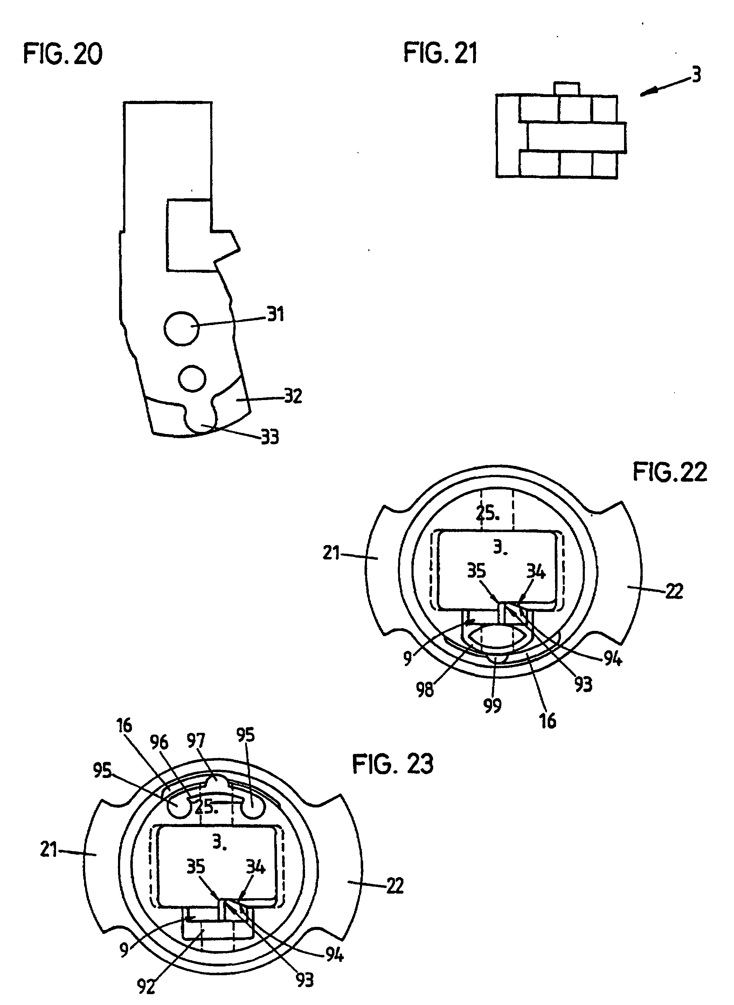

Dans une variante, figure 23, le mécanisme comporte une butée surpassable et amovible de température constituée par un insert présentant deux piliers 95 reliés par un pont 96 déformable élastiquement qui est muni d'un poussoir 97 coopérant avec la gorge 16 du boîtier 1.

Les piliers 95 sont enfilés de façon amovible dans des évidements correspondant que comporte le guide 2.

Il est évident que cet insert, comme le taquet formant la butée de débit comporte une pince déformable élastiquement à son extrémité inférieure permettant l'encliquetage sur l'axe 31 du levier 3.

Dans la seconde variante du mécanisme illustrée à la figure 22 un seul insert constitue simultanément les deux butées. Cet insert se présente sous la forme d'un taquet, comme la butée de débit décrite précédemment, muni d'un pont déformable élastiquement 98 portant un poussoir 99 comme dans la première variante du mécanisme.

## Revendications

1. Mécanisme mitigeur pour armature sanitaire comportant un boîtier renfermant une plaquette céramique fixe munie de trois passages traversant, une plaquette céramique mobile munie d'une ouverture traversante et coulissant sans jeu et de façon étanche sur la plaquette fixe, un entraîneur solidaire de la plaquette mobile et déplaçable avec celle-ci dans des déplacements angulaires et linéaires par rapport à la plaquette fixe, un guide monté rotatif dans le boîtier portant un levier de commande basculant dont une extrémité est en prise avec l'entraîneur pour commander ses déplacements, une butée surpassable et amovible de limitation de débit, caractérisé par le fait que cette butée de limitation de débit est constituée d'un taquet engagé dans une fente de la partie cylindrique du guide dont l'extrémité inférieure comporte une pince élastique encliquetable sur l'axe de pivotement du levier.

2. Mécanisme selon la revendication 1, caractérisé par le fait que ce taquet comporte une face latérale en contact avec une face latérale du levier, cette face latérale du taquet comportant un arrêt coopérant avec un cran de la face latérale du levier.

3. Mécanisme selon la revendication 2, caractérisé par le fait que le taquet de la butée de débit comporte un pont élastique portant un poussoir émergeant de la surface périphérique de la partie cylindrique du guide s'étend dans une gorge pratiquée dans la surface interne du col du boîtier et dont l'étendue angulaire définit la course angulaire du guide dans le boîtier, constituant ainsi une butée de débit et de température.

4. Mécanisme selon l'une des revendications 1 ou 2, caractérisé par le fait qu'il comporte une butée surpassable et amovible de limitation de température.

5. Mécanisme selon la revendication 4, caractérisé par le fait que cette butée est constituée d'un insert comportant deux piliers engagés dans des évidements du guide, ces piliers étant reliés par un pont déformable élastiquement comportant un poussoir émergeant de la surface périphérique de la partie cylindrique du guide s'étend dans une gorge pratiquée dans la surface interne du col du boîtier et dont l'étendue angulaire définit la course angulaire du guide dans le boîtier.

## Claims

1. A mixer mechanism for a sanitary appliance including a housing having a mixed ceramic platelet provided with three passages extending through the same, a movable ceramic platelet provided with an opening extending through the same and capable of sliding on the fixed platelet without clearance and without loss of watertightness, a driver integral with the movable platelet and movable therewith angularly and linearly with respect to the fixed platelet, a guide mounted rotatably in the housing carrying a tiltable control lever of which one end is engaged with the driver to control its movements, and an overridable removable stop for limiting the flow, characterised in that this flow limiting stop is comprised of a lug engaged into a slot of the cylindrical part of the guide of which the lower end includes a resilient clip which can be snapped on the pivot axis of the lever.

2. A mechanism according to claim 1, characterised in that this lug has a lateral face in contact with a lateral face of the lever, this lateral face of the lug including a stop co-operating with a step of the lateral face of the lever.

3. A mechanism according to claim 2, characterised in that the lug of the flow stop includes a resilient bridge carrying a pusher which protrudes from the peripheral surface of the cylindrical part of the guide and extends into a groove which is formed in the inner surface of the neck of the housing and of which the angular range defines the angular travel distance of the guide in the housing, thus providing a flow and temperature stop.

4. A mechanism according to one of claims 1 or 2, characterised in that it includes an overridable removable stop for limiting the temperature.

5. A mechanism according to claim 4, characterised in that this stop is constructed as an insert including two pillars engaged in recesses of the guide, these pillars being connected by a bridge which is deformable elastically and which includes a pusher protruding from the peripheral surface of the cylindrical part of the guide and extending into a groove which is formed in the internal surface of the neck of the housing and of which the angular length defines the angular travel of the guide inside the housing.

## Patentansprüche

1. Mischvorrichtung für Wasserleitungsarmatur mit einem Gehäuse, enthaltend ein ortsfestes keramisches Plättchen, das mit drei durchgehenden Durchlässen versehen ist, ein bewegliches keramisches Plättchen, das mit einer durchgehenden Öffnung versehen ist und ohne Spiel und in abgedichteter Art und Weise auf dem ortsfesten Plättchen gleitet, einen Mitnehmer, der fest mit dem beweglichen Plättchen verbunden ist und zusammen mit diesem gegenüber dem ortsfesten Plättchen in Winkelverschiebungen und in linearen Verschiebungen bewegt werden kann, sowie eine Führung, die drehbar in das Gehäuse montiert ist und einen schwenkbaren Steuerhebel trägt, dessen eines Ende sich im Eingriff mit dem Mitnehmer befindet, um dessen Verschiebungen zu steuern, einen überdrehbaren und herausnehmbaren Anschlag zur Durchflussmengenbegrenzung, dadurch gekennzeichnet, dass dieser Anschlag zur Durchflussmengenbegrenzung aus einem Stopper besteht, der in einen Schlitz des zylindrischen Abschnitts der Führung einrastet und dessen unteres Ende eine elastische Klemme umfasst, die auf der Schwenkachse des Hebels eingerastet werden kann.

2. Vorrichtung nach Anspruch 1, dadurch gekennzeichnet, dass dieser Stopper eine Seitenfläche in Berührung mit einer Seitenfläche des Hebels hat, wobei diese Seitenfläche des Stoppers einen Anschlag umfasst, der mit einer Kerbe der Seitenfläche des Hebels zusammenwirkt.

3. Vorrichtung nach Anspruch 2, dadurch gekennzeichnet, dass der Stopper des Durchflussmengenanschlags eine elastische Brücke umfasst, die einen Drücker trägt, der aus der Umfangsfläche des zylindrischen Abschnitts der Führung herausragt, und die sich in eine Kehle hinein erstreckt, die in die Innenfläche des Halses des Gehäuses eingelassen ist und deren winkelmässige Ausdehnung den Winkelbereich der Führung im Gehäuse definiert, somit auch einen Durchflussmengen- und Temperaturanschlag darstellend.

4. Vorrichtung nach einem der Ansprüche 1 oder 2, dadurch gekennzeichnet, dass sie einen überdrehbaren und herausnehmbaren Anschlag zur Temperaturbegrenzung umfasst.

5. Vorrichtung nach Anspruch 4, dadurch gekennzeichnet, dass dieser Anschlag aus einem Einsatz besteht, der zwei Stützen umfasst, die in Aussparungen der Führung eingreifen und miteinander durch eine elastisch deformierbare Brücke verbunden sind, die einen Drücker trägt, der aus der Umfangsfläche des zylindrischen Abschnitts der Führung herausragt, und die sich in eine Kehle hinein erstreckt, die in die Innenfläche des Halses des Gehäuses eingelassen ist und deren winkelmässige Ausdehnung den Winkelbereich der Führung im Gehäuse definiert.
